# EUROPÄISCHE PATENTSCHRIFT

(11) **EP 0 487 927 B1**
(45) Veröffentlichungstag und Bekanntmachung des Hinweises auf die Patenterteilung: **08.05.1996**
(21) Anmeldenummer: 91118596.5
(22) Anmeldetag: 31.10.1991
(51) Int. Cl.: H02J 7/14

(54) **Verfahren und Vorrichtung zur Spannungsregelung in Abhängigkeit vom Batterie-Ladezustand**
Method and apparatus for controlling the tension in dependence of the state of charge of the battery
Procédé et appareil pour régler la tension en fonction de l'état de charge de la batterie

(30) Priorität: 30.11.1990 DE 4038225
(43) Veröffentlichungstag der Anmeldung: 03.06.1992
(73) Patentinhaber: ROBERT BOSCH GMBH, 70442 Stuttgart (DE)
(72) Erfinder: Kohl, Walter, W-7120 Bietigheim (DE); Mittag, Rainer, Dipl.-Ing. (FH), W-7014 Kornwestheim (DE)
(74) Vertreter: Friedmann, Jürgen, Dr.-Ing.

(56) Entgegenhaltungen:
- EP-A- 0 094 686
- WO-A-84/02431
- DE-A- 3 243 075
- US-A- 4 310 793
- US-A- 4 862 055
- US-A- 4 902 956

## Beschreibung

### Stand der Tecknik

Die Erfindung geht aus von einem Verfahren und einer Vorrichtung zur Spannungsregelung in Abhängigkeit vom Batterie-Ladezustand nach der Gattung der Hauptansprüche.

Es ist bekannt, daß der Ladezustand der Batterie im Kraftfahrzeug aufgrund kritischer Fahrzustände, beispielsweise bei Fahrt mit niedriger Drehzahl und gleichzeitig eingeschalteten Verbrauchern mit hoher Leistung, auf unerwünschte Werte absinken kann. Für eine zuverlässige Spannungsregelung ist es daher erforderlich, die Bordnetzbelastung und den aktuellen Ladezustand der Batterie zu erkennen und zu berücksichtigen, es wird daher beispielsweise in der DE-OS 32 43 075 vorgeschlagen, den Ladezustand der Batterie in verschiedenen Zeitabständen zu ermitteln. Dazu wird die Batterie durch eine Steuerelektronik kurzfristig vom Bordnetz getrennt und mit einem Prüfwiderstand belastet. Die Spannung, die sich dabei zwischen den Batterieklemmen einstellt, kann unter Berücksichtigung der Batterietemperatur als Maß für den Ladezustand der Batterie herangezogen werden. Wird dabei erkannt, daß der Ladezustand der Batterie unterhalb eines zulässigen Wertes liegt, werden geeignete Maßnahmen ergriffen, beispielsweise wird die Drehzahl erhöht oder die Verbraucherlastwerte werden verringert, so daß der Ladezustand während der folgenden Fahrzeit verbessert werden kann.

Nachteilig ist bei dieser Vorgehensweise, daß die Batterie zeitweilig vom Fahrzeugbordnetz abgetrennt werden muß. Außerdem werden keine Informationen darüber erhalten, wie groß die Bordnetzbelastung ist.

Aus der WO-A-84/02431 ist ein Verfahren zur Ladung einer Fahrzeugbatterie bekannt, bei dem ein Spannungsregler die vom Generator erzeugte Spannung so regelt, daß während eines ersten Zeitintervalls die Spannung einen für die Ladung optimalen Wert aufweist und während eines weiteren Zeitintervalls die Höhe der Batteriespannung gemessen wird, dazu wird die Batterie dann vom Generator getrennt bzw. der Erregerstrom wird unterbrochen. In Abhängigkeit vom Wert der gemessenen Batteriespannung wird die Ladespannung anschließend erhöht oder erniedrigt.

Dieses Verfahren hat also den Nachteil, daß die Batterie zur Spannungsmessung vom Generator getrennt werden muß oder daß der Erregerstrom vollständig abgeschaltet wird, daher kann die Batterie während dieser Zeit nicht geladen werden.

### Vorteile der Erfindung

Das erfindungsgemäße Verfahren und die erfindungsgemäße Vorrichtung mit den kennzeichnenden Merkmalen der Hauptansprüche hat gegenüber dem Bekannten den Vorteil, daß sowohl die Bordnetzbelastung als auch der Ladezustand der Batterie getrennt voneinander gemessen werden und die erhaltenen Meßergebnisse direkt bei der Spannungsregelung berücksichtigt werden.

Wird eine zu hohe Bordnetzbelastung oder ein zu schlechter Ladezustand der Batterie erkannt, so werden geeignete Maßnahmen ergriffen, um diese unerwünschten Zustände zu beheben. So wird beispielsweise der Fahrer informiert, nicht notwendige Verbraucher abzuschalten, es ist auch möglich nicht notwendige Verbraucher automatisch abzuschalten. Weiterhin wird das Steuergerät, das den Motorbetrieb regelt, veranlaßt, die Leerlaufdrehzahl zu erhöhen.

Eine weitere Verbesserung wird durch Erhöhen der Regelspannung über den typischen Wert erreicht, es wird dabei jedoch berücksichtigt, ob spannungsempfindliche Verbraucher eingeschaltet sind oder nicht.

Von besonderem Vorteil ist, daß die Bordnetzbelastung im normalen Betriebszustand ermittelt wird und die Ermittlung des Ladezustandes der Batterie bei nur geringfügiger abgesenkter Regelspannung erfolgen kann, wobei der Generator im erregten Zustand verbleibt und ein Abtrennen der Batterie vom Bordnetz nicht erforderlich ist.

### Zeichnung

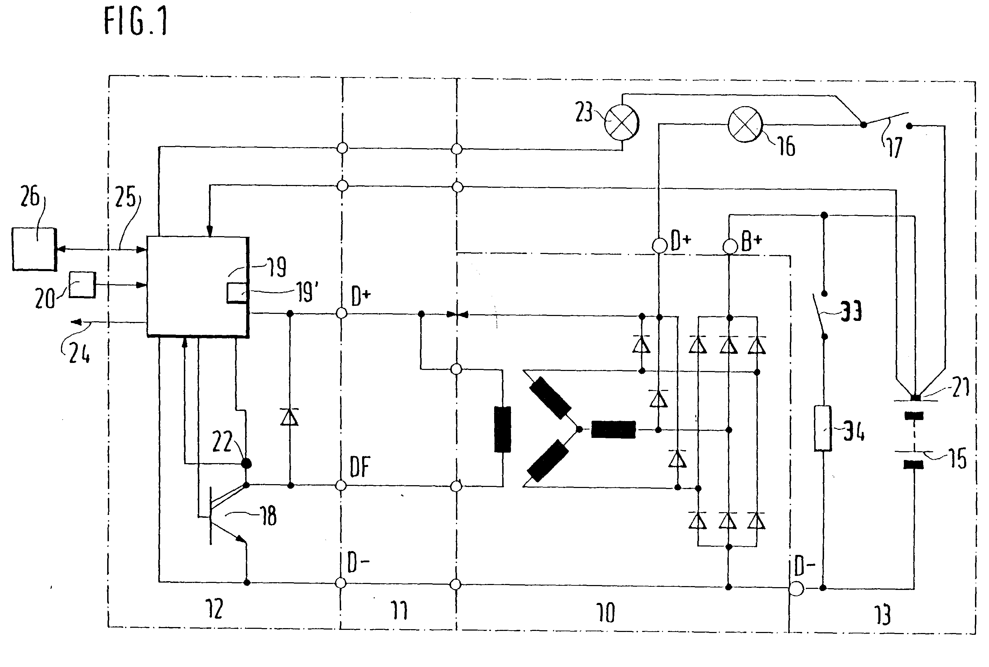

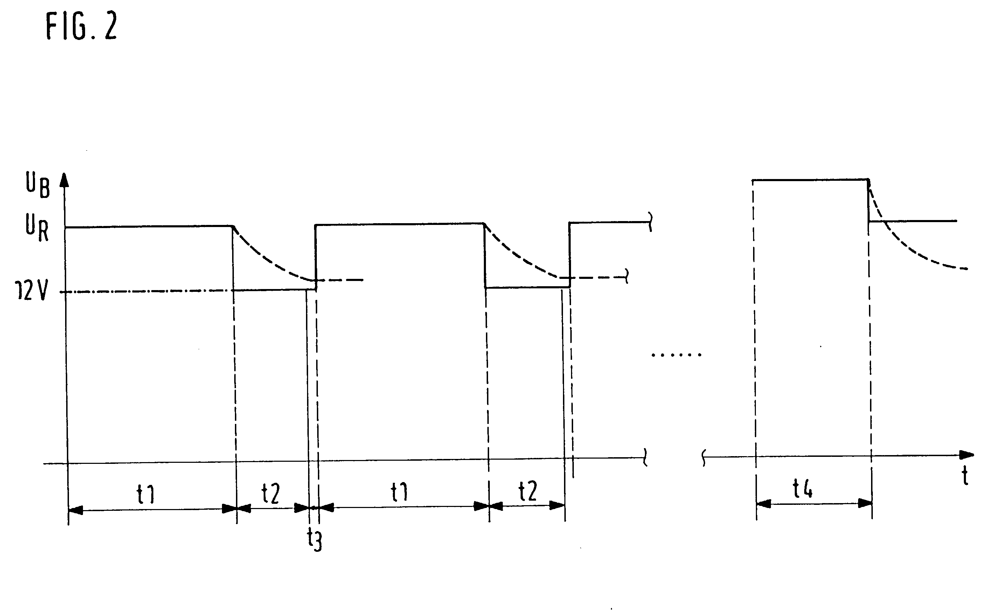

Figur 1 zeigt eine erfindungsgemäße Schaltungsanordnung und in Figur 2 ist der Verlauf der Batteriespannung über der Zeit aufgetragen.

### Beschreibung der Erfindung

In Figur 1 ist mit 10 ein Drehstromgenerator bezeichnet, der über den Bürstenhalter 11 mit dem Spannungsregler 12 verbunden ist. Weiterhin ist der Drehstromgenerator 10 über die Anschlußklemme B+ mit dem Bordnetz 13 verbunden, das im gewählten Ausführungsbeispiel lediglich durch einen Schalter 33 und einen Widerstand 34 symbolisiert ist, wobei zum Bordnetz ebenfalls noch eine Batterie 15 gehört, deren Pluspol ebenfalls an die Klemme B+ angeschlossen ist und deren Minuspol an die Klemme D- des Drehstromgenerators 10 angeschlossen ist.

Über die Klemme D+ ist der Drehstromgenerator 10 mit der Ladekontrollampe 16 verbunden, die ihrerseits über den Zündschalter 17 an den Pluspol der Batterie 15 anschließbar ist.

Vom Spannungsregler 12 sind als wesentliche Bestandteile der Schalttransistor 18 sowie das Steuerteil 19 abgebildet. Das Steuerteil 19 enthält wenigstens einen integrierten Schaltkreis, üblicherweise jedoch einen eigenen Mikroprozessor, der auch wenigstens einen Datenspeicher enthält.

Dem Steuerteil 19 werden Informationen zugeführt, über Batteriespannung, Drehzahl des Generators, Schaltzustand des Schalttransistors usw.. Zur Ermittlung dieser Informationen werden entweder geeignete Sensoren, beispielsweise ein Drehzahlsensor 20, ein Spannungssensor 21 oder ein Sensor zur Messung des Tastverhältnisses 22 eingesetzt, zur Ermittlung der Batteriespannung genügt es, wenn diese über eine Leitung, die an den Pluspol der Batterie 15 angeschlossen ist, abgegriffen wird.

Zur Fahrerinformation bzw. Fehleranzeige ist eine Anzeigevorrichtung 23 vorgesehen, die beispielsweise als LED ausgebildet sein kann und mit dem Steuerteil 19 sowie mit dem batteriefernen Anschluß des Zündschalters 17 verbunden ist.

Über einen Anschluß 24 ist das Steuerteil 19 des Spannungsreglers 12 mit dem hier nicht dargestellten Steuergerät des Fahrzeugs verbunden. Über dieses Steuergerät können nach entsprechenden, vom Steuerteil 19 gelieferten Informationen Vorgänge zur Regelung der Drehzahl ausgelöst werden oder über einen Schalter, entsprechend dem Schalter 33 die weniger wichtigen Verbraucher automatisch von der Spannungsversorgung abgetrennt werden.

Das Steuerteil 19, das beispielsweise einen Mikroprozessor oder einen µC enthält, regelt über den Schalttransistor 18 den Erregerstrom und damit die Ausgangsspannung des Generators. Vom Steuerteil 19 werden auch die übrigen Steuer- und Schaltfunktionen ausgelöst, außerdem finden im Steuerteil 19 Zeitmessungen zur Festlegung bestimmter Zeiten t1 - t4 bzw. der zugehörigen Zeitintervalle statt, mit 19' ist eine Zeitmeßeinrichtung, die Bestandteil des Steuerteiles 19 ist, schematisch angedeutet.

Weiterhin finden im Steuerteil 19 Spannungsvergleiche statt, so wird beispielsweise die gemessene Batteriespannung mit einer Schwellspannung verglichen, zur Auslösung einer Anzeige 23 bei Unterschreiten dieser Schwellspannung.

Da in einem Fahrzeug üblicherweise ohnehin ein zentrales Steuergerät 26 vorhanden ist, das die erforderlichen Steuerungen und/oder Regelungen durchführt, ist es auch möglich, ein vereinfachtes Steuerteil 19 des Spannungsreglers 12 einzusetzen und dafür im zentralen Steuergerät 26 einen Teil der zur Spannungsregelung erforderlichen Vorgänge wie Zeitmessungen, Spannungsvergleiche usw. vorzunehmen. Zusätzlich wird dann das Steuerteil 19 über einen Datenbus 25 mit dem zentralen Steuergerät verbunden, wobei der Datenbus 25 Daten in beide Richtungen weiterleiten kann.

Die Funktion der in Figur abgebildeten Schaltungsanordnung soll nun anhand der Figur 2, in der der Verlauf der Batteriespannung U_{B} über der Zeit aufgetragen ist, erläutert werden.

Während der Zeit t1 befindet sich der Spannungsregler 12 in seinem normalen Regelzustand, die Batteriespannung entspricht daher der üblichen Regelspannung, in 12 Volt-Bordnetzen beträgt diese Spannung etwa 14,2 Volt. Während der Zeit t2 wird die Regelspannung abgesenkt auf einen Wert von beispielsweise 12 Volt, die sich dann einstellende Batteriespannung U_{B} wird gemessen. Nach einer weiteren Zeit t3 wird die Regelspannung wieder auf ihren normalen Wert U_{R} erhöht, es stellt sich dann auch wieder dieselbe Batteriespannung U_{B} ein.

Während der Zeit tl wird im Steuerteil 19 aus der Generatordrehzahl sowie aus dem Tastverhältnis, das am Schalttransistor 18 beispielsweise mittels eines Sensors 22 abgegriffen wird, die Bordnetzbelastung ermittelt. Je höher die Bordnetzbelastung ist, d. h. je mehr Verbraucher zugeschaltet sind, desto häufiger und länger befindet sich der Schalttransistor 18 in seinem leitenden Zustand, wodurch der Strom durch die Erregerwicklung des Generators erhöht wird, d. h., das Bordnetz wird zunehmend von der Batterie versorgt. Dadurch verschlechtert sich der Ladezustand der Batterie.

Während der Zeit t2, während der die Regelspannung abgesenkt ist, wird der Spannungsverlauf an der Batterie 15 ausgewertet und zur Bestimmung des Ladezustandes der Batterie 15 verwendet. Dazu wird der Spannungsverlauf mit im Steuerteil 19 abgespeicherten batterie- und bordnetztypischen Kenndaten verglichen. Aus dem Vergleichsergebnis lassen sich zuverlässige Informationen über den Ladezustand der Batterie gewinnen.

In einer weiteren Ausgestaltung wird nicht der ganze Spannungsverlauf während der Zeit t2 ausgewertet, sondern es wird eine Spannungsmessung nach der Zeit t2 vorgenommen und aus diesem Meßergebnis durch Vergleich mit gespeicherten batterie- und bordnetztypischen Kenndaten wiederum auf den Ladezustand der Batterie geschlossen.

Wird ein schlechter Ladezustand der Batterie erkannt, werden vom Steuerteil 19 Maßnahmen eingeleitet, die zur Verbesserung des Batterieladezustandes beitragen. Dazu wird zunächst der Fahrer durch Aufleuchten der Anzeige 23 informiert, daß ein schlechter Ladezustand der Batterie 15 vorliegt. Er kann dann selbst nicht unbedingt notwendige Verbraucher abschalten. Es ist weiterhin auch möglich, daß das Steuerteil 19 selbst und automatisch nicht notwendige Verbraucher abschaltet. Weiterhin ist möglich, daß das Steuerteil 19 das für die Motorregelung zuständige Steuergerät veranlaßt, die Motorleerlaufdrehzahl nₘ zu erhöhen und damit auch die Drehzahl des Generators n_{G} zu erhöhen.

Eine weitere Möglichkeit zur Verbesserung des Ladezustandes der Batterie besteht darin, die Regelspannung U_{R} gegenüber der normalen Regelspannung zu erhöhen. Das Steuerteil 19 steuert dabei den Schalttransistor 18 länger als üblich in seinen eingeschalteten Zustand. Die Erhöhung der Regelspannung über die normale Regelspannung hinaus ist nur dann erlaubt, wenn keine spannungsempfindliche Bauelemente gefährdet sind. Außerdem soll diese Spannungserhöhung nur während einer bestimmten Zeit erfolgen. In Figur 2 ist während der Zeit t4 die Regelspannung gegenüber der normalen Spannung erhöht.

Nach Ablauf der Zeit t4 kann die Regelspannung entweder wieder auf den niedrigen Wert von 12 Volt abgesenkt werden und über eine neuerliche Messung der Batteriespannung auf deren Ladezustand geschlossen werden. Es ist jedoch auch möglich, nach Ablauf der Zeit t4 eine Phase mit normaler Regelspannungshöhe anzuschließen, entsprechend der Phase während t1.

Aus dem Verlauf der Batteriespannung während der Zeit t3 kann auch erkannt werden, ob die Batterie einen Defekt aufweist oder ob ein batterieloser Betrieb durchgeführt wird, da in beiden Fällen die Spannung schnell absinkt.

Die Batteriespannung wird normalerweise in der Nähe des Pluspols der Batterie 15 mittels eine Spannungssensors 21 gemessen, es kann jedoch auch die Spannung an anderer Stelle im Bordnetz, beispielsweise an der Klemme B+ des Generators 10 gemessen werden.

## Patentansprüche

1. Verfahren zur Spannungsregelung in Abhängigkeit vom Batterieladezustand, bei dem ein Spannungsregler über einen Schalttransistor (18) den Erregerstrom und somit die von einem Generator erzeugte, zur Ladung der Batterie und zur Versorgung von Verbrauchern erforderliche Spannung regelt, wobei während eines ersten Zeitintervalls (t1) die Regelspannung auf ihrem Normalwert U_{R} gehalten wird, und während eines zweiten Zeitintervalls (t2) die Regelspannung abgesenkt wird und die sich einstellende Batteriespannung (U_{B}) gemessen wird und aus der gemessenen Batteriespannung (U_{B}) in Abhängigkeit von abgespeicherten batterie- und bordnetztypischen Kenndaten der Ladezustand der Batterie ermittelt wird und bei erkanntem schlechtem Ladezustand geeignete Maßnahmen zur Verbesserung des Ladezustandes eingeleitet werden, dadurch gekennzeichnet, daß die Absenkung der Regelspannung im zweiten Intervall auf einen Wert deutlich größer Null, vorzugsweise etwa 12 Volt, erfolgt und daß während des ersten Zeitintervalls (t1) die Belastung durch das Bordnetz durch Bestimmung des Tastverhältnisses des Schalttransistors (18) des Spannungsreglers (12) unter Berücksichtigung der Drehzahl des Generators (10) ermittelt wird.

2. Verfahren nach Anspruch 1, dadurch gekennzeichnet, daß nach dem Erkennen eines schlechten Ladezustands der Batterie wenigstens eine oder eine Kombination der folgenden Maßnahmen eingeleitet wird:
a) Anzeige des erkannten schlechten Ladezustands
b) Anzeige, daß nicht notwendige Verbraucher abzuschalten sind,
c) automatisches Abschalten nicht notwendiger Verbraucher,
d) Erhöhung der Motorleerlaufdrehzahl,
e) Erhöhung der Regelspannung über ihren normalen Wert, für eine vorgebbare Zeitdauer (t4) unter Beachtung, daß keine spannungskritischen Verbraucher eingeschaltet sind.

3. Verfahren nach Anspruch 1 oder 2, dadurch gekennzeichnet, daß ein schlechter Ladezustand der Batterie dann erkannt wird, wenn die Batteriespannung während des zweiten Zeitintervalls (t2) einen vorgebaren Schwellwert unterschreitet.

4. Vorrichtung zur Spannungsregelung in Abhängigkeit vom Batterieladezustand, mit einem Spannungsregler, der über einen Schalttransistor (18) den Erregerstrom und somit die vom Generator erzeugte, zur Ladung der Batterie und zur Versorgung von Verbrauchern erforderliche Spannung regelt, wobei der Spannungsregler ein Steuerteil aufweist, vorzugsweise einen Mikrorechner, der mit wenigstens einer Anzeige verbunden ist, und dem wenigstens die Batteriespannung und die Drehzahl des Generators zugeführt werden, wobei das Steuerteil (19) Speicher enthält, in denen batterie- und bordnetztypische Kenndaten abgespeichert sind, und das Steuerteil (19) eine Zeitmeßeinrichtung aufweist und Berechnungen durchführt, zur Erkennung des Ladezustands in Abhängigkeit von der gemessenen Batteriespannung und Steueranschlüsse aufweist über die bei erkanntem schlechtem Batterieladezustand Maßnahmen zur Verbesserung des Batterieladezustands ausgelöst werden, dadurch gekennzeichnet, daß dem Steuerteil (19) das Tastverhältnis des Schalttransistors (18) zugeführt wird und im Steuerteil (19) während eines Zeitintervalls (t1) Berechnungen ablaufen, die aus dem Tastverhältnis und der Generatordrehzahl die Belastung durch das Bordnetz ermitteln.

5. Vorrichtung nach Anspruch 4, dadurch gekennzeichnet, daß das Steuerteil (19) die Höhe der Regelspannung (U_{R}) festlegt.

6. Vorrichtung nach Anspruch 4 oder 5, dadurch gekennzeichnet, daß das Steuerteil (19) mit einem Steuergerät zur Regelung der Brennkraftmaschine verbunden ist.

7. Vorrichtung nach einem der Ansprüche 4 bis 6, dadurch gekennzeichnet, daß wenigstens ein Teil des Steuerteils (19) Bestandteil eines zentralen Steuergerätes (26) ist, das zur Steuerung und/oder Regelung der Brennkraftmaschine vorgesehen ist.

8. Vorrichtung nach Anspruch 7, dadurch gekennzeichnet, daß das Steuerteil (19) des Spannungsreglers (12) über einen Datenbus (25) mit dem zentralen Steuergerät (26) verbunden ist.

## Claims

1. Method for regulating voltage as a function of the charge state of a battery, in which method a voltage regulator regulates the exciter current via a switching transistor (18) and thus regulates the voltage which is produced by a generator and is required for charging the battery and for supplying loads, the regulating voltage being kept at its normal value U_{R} during a first time interval (t1) and the regulating voltage being reduced during a second time interval (t2) and the battery voltage (U_{B}) which results being measured and the charge state of the battery being determined from the measured battery voltage (U_{B}) as a function of stored characteristic data which are typical of the battery and of the vehicle's electrical system and when a poor charge state is detected suitable measures for improving the charge state being initiated, characterized in that in the second time interval the regulating voltage is reduced to a value which is significantly greater than zero, preferably approximately 12 volts, and in that during the first time interval (t1) the loading by the vehicle's electrical system is determined by determining the pulse duty factor of the switching transistor (18) of the voltage regulator (12) taking into account the rotational speed of the generator (10).

2. Method according to Claim 1, characterized in that after a poor charge state of the battery is detected at least one measure, or a combination of the following measures, is initiated:
a) the detected poor charge state is indicated
b) it is indicated that loads which are not necessary are to be switched off,
c) loads which are not necessary are automatically switched off,
d) the engine idling speed is increased,
e) the regulating voltage is increased above a normal value for a prescribable time period (t4) with the proviso that no loads which are critical for the voltage are switched on.

3. Method according to Claim 1 or 2, characterized in that a poor charge state of the battery is detected if the battery voltage drops below a prescribable threshold value during the second time interval (t2).

4. Device for regulating voltage as a function of the charge state of a battery, with a voltage regulator which regulates the exciter current via a switching transistor (18) and thus regulates the voltage which is produced by the generator and is required for charging the battery and for supplying loads, the voltage regulator having a control component, preferably a microcomputer, which is connected to at least one indicating means and to which at least the battery voltage and the rotational speed of the generator are fed, the control component (19) containing memories in which characteristic data which are typical of the battery and of the vehicle's electrical system are stored and the control component (19) has a time measuring device and carries out calculations for detecting the charge state as a function of the measured battery voltage and has control terminals via which measures for improving the battery charge state are triggered when a poor battery charge state is detected, characterized in that the pulse duty factor of the switching transistor (18) is fed to the control component (19) and in that calculations which determine the loading by the vehicle's electrical system from the pulse duty factor and the rotational speed of the generator take place in the control component (19) during a time interval (t1).

5. Device according to Claim 4, characterized in that the control component (19) specifies the level of the regulating voltage (U_{R}).

6. Device according to Claim 4 or 5, characterized in that the control component (19) is connected to a control device for regulating the internal combustion engine.

7. Device according to one of Claims 4 to 6, characterized in that at least a part of the control component (19) is a component of a central control device (26) which is provided for open-loop and/or closed-loop control of the internal combustion engine.

8. Device according to Claim 7, characterized in that the control component (19) of the voltage regulator (12) is connected to the central control device (26) via a data bus (25).

## Revendications

1. Procédé de régulation de la tension en fonction de l'état de charge d'une batterie selon lequel un régulateur de tension régule par l'intermédiaire d'un transistor de commutation (18) le courant d'excitation et ainsi la tension fournie par un générateur et nécessaire à la charge de la batterie et à l'alimentation d'utilisateurs, période consistant pendant un premier intervalle de temps (t1) à maintenir la tension de régulation à sa valeur normale (U_{R}) alors que dans un second intervalle (t2) on abaisse la tension de régulation et on mesure la tension de batterie (U_{B}) qui s'établit et à partir de la tension de batterie mesurée (U_{B}), en fonction des données caractéristiques de la batterie et du réseau embarqué, données enregistrées en mémoire, on détermine l'état de charge de la batterie et lorsqu'on décèle un état de charge mauvais, on prend des mesures appropriées pour améliorer l'état de charge, procédé caractérisé en ce que l'abaissement de la tension de régulation se fait dans un second intervalle à une valeur significativement plus grande que la valeur nulle, de préférence environ 12 volts et pendant le premier intervalle de temps (t1) la charge par le réseau embarqué est déterminée par la détermination du rapport de travail du transistor de commutation (18) du régulateur de tension (12) en tenant compte de la vitesse de rotation du générateur (10).

2. Procédé selon la revendication 1, caractérisé en ce qu'après avoir détecté un mauvais état de charge de la batterie on prend au moins l'une des mesures suivantes ou une combinaison de celles-ci :
a) affichage du mauvais état de charge,
b) affichage qu'il faut couper les utilisateurs non nécessaires,
c) coupure automatique d'utilisateurs non nécessaires,
d) Augmentation de la vitesse de rotation de ralenti du moteur,
e) augmentation de la tension de régulation au-delà de sa valeur normale pour une durée prédéterminée (t4) en veillant à ce qu'aucun utilisateur sensible à la tension ne soit branché.

3. Procédé selon la revendication 1 ou 2, caractérisé en ce qu'on détecte un mauvais état de charge de la batterie si la tension de la batterie passe en dessous d'un seuil prédéterminé pendant le second intervalle de temps (t2).

4. Dispositif de régulation de tension en fonction de l'état de charge d'une batterie à l'aide d'un régulateur de tension qui régule, par l'intermédiaire d'un transistor de commutation (18), le courant d'excitation et ainsi la tension fournie par un générateur pour charger la batterie et alimenter des utilisateurs, le régulateur de tension ayant une partie de commande de préférence un microcalculateur reliée à au moins un moyen d'affichage et recevant au moins la tension de la batterie et la vitesse de rotation du générateur, la partie de commande (19) comportant une mémoire dans laquelle sont enregistrées les données caractéristiques de la batterie et du réseau embarqué et la partie de commande (19) comportant une installation de mesure de temps et effectuant des calculs pour détecter l'état de charge en fonction de la tension de batterie mesurée et comportant des branchements de commande par lesquels il peut déclencher des mesures pour améliorer l'état de charge de la batterie lorsqu'un mauvais état de charge de la batterie a été détecté, caractérisé en ce que le circuit de commande (19) reçoit le rapport de travail du transistor de commutation (18) et pendant un intervalle de temps le circuit de commande (19) effectue des calculs déterminant la charge du réseau embarqué à partir du rapport de travail et de la vitesse de rotation du générateur.

5. Dispositif selon la revendication 4, caractérisé en ce que le circuit de commande (19) détermine l'amplitude de la tension de régulation (U_{R}).

6. Dispositif selon la revendication 4 ou 5, caractérisé en ce que le circuit de commande (19) est relié à un appareil de commande pour réguler le moteur à combustion interne.

7. Dispositif selon l'une des revendications 4 à 6, caractérisé en ce qu'au moins une partie du circuit de commande (19) appartient à un appareil de commande central (26) prévu pour commander et/ou réguler le moteur à combustion interne.

8. Dispositif selon la revendication 7, caractérisé en ce que le circuit de commande (19) du régulateur de tension (12) est relié à l'appareil de commande central (26) par un bus de données (25).
